# EUROPEAN PATENT APPLICATION

(11) **EP 4 848 231 A1**
(43) Date of publication of application: **02.12.2026**
(21) Application number: 26206853.9
(22) Date of filing: 23.09.2026
(51) Int. Cl.: G06V 20/52, G06V 20/70, G06V 40/20

(54) **METHOD, APPARATUS, MEDIUM, AND ELECTRONIC DEVICE FOR CONSTRUCTING RISK SEMANTIC SPACE**

(30) Priority: 04.08.2026 SG 10202602709X
(71) Applicant: XG TECH PTE. LTD., Singapore 179098 (SG)
(72) Inventor: LIN, Wei, Singapore 179098 (SG); HUANG, Jingchang, Singapore 179098 (SG)
(74) Representative: Dehns Germany Partnerschaft mbB

(57) **Abstract**

Disclosed are a method, apparatus, medium, and electronic device for constructing a risk semantic space, relating to the fields of artificial intelligence and computer vision. The method includes: constructing (210) a spatial infrastructure model based on spatial structure information of a target scene, thereby acquiring (220) risk factor data in the target scene; determining (230) a risk semantic region in the target scene based on the spatial infrastructure model and the risk factor data; acquiring (240) a region in which a target object is located, and in response to said region being the risk semantic region, performing dynamic visible domain analysis on said region to determine an observation credibility of said region; and constructing (250) a risk semantic space model based on a behavior of the target object, said region, and the observation credibility.

## Description

### TECHNICAL FIELD

The present disclosure relates to the technical fields of artificial intelligence and computer vision, and in particular to a method, apparatus, computer-readable storage medium, and electronic device for constructing a risk semantic space.

### BACKGROUND

With the development of artificial intelligence and computer vision technologies, intelligent Internet of Things (IoT) devices have become increasingly widespread, such as smart cameras, robotic vacuum cleaners, and environmental sensors. Intelligent loT devices deployed in an environment may be used for security monitoring.

### SUMMARY

Currently, security monitoring systems still remain in a "passive perception" stage, i.e., a response mechanism is triggered only after a risk event has occurred - for example, only after an elderly person has already fallen, a child has already climbed to a height, or an object has already been broken - resulting in a lack of "proactive perception" capability for risks. Such systems can only identify a final hazardous outcome and are unable to proactively perform risk reasoning before a risk event occurs, thereby reducing the effectiveness of security monitoring.

In order to solve the above technical problems, the present disclosure provides a method for constructing a risk semantic space, which is capable of, by constructing a risk semantic model, associating a spatial structure of a target scene, a risk semantic region, a region in which a target object is located, and a behavior of the target object, and an observation credibility, thereby achieving proactive risk perception and reasoning, significantly enhancing the proactive security capability of the target scene, and improving the effectiveness of security monitoring.

A first aspect of the present disclosure provides a method for constructing a risk semantic space. The method includes: constructing a spatial infrastructure model based on spatial structure information of a target scene; acquiring risk factor data in the target scene based on the spatial infrastructure model; determining a risk semantic region in the target scene based on the spatial infrastructure model and the risk factor data; acquiring a region in which a target object is located, and in response to said region in which the target object is located being the risk semantic region, performing dynamic visible domain analysis on said region in which the target object is located to determine an observation credibility of said region in which the target object is located; and constructing a risk semantic space model based on the behavior of the target object, said region in which the target object is located, and the observation credibility.

A second aspect of the present disclosure provides an apparatus for constructing a risk semantic space. The apparatus includes: a first construction module, configured to construct a spatial infrastructure model based on spatial structure information of a target scene; a risk semantic region generation module, configured to acquire risk factor data in the target scene based on the spatial infrastructure model, and determine a risk semantic region in the target scene based on the spatial infrastructure model and the risk factor data; a visible domain analysis module, configured to acquire a region in which a target object is located, and in response to said region in which the target object is located being a risk semantic region, perform dynamic visible domain analysis on said region in which the target object is located to determine an observation credibility of said region in which the target object is located; and a second construction module, configured to construct a risk semantic space model based on a behavior of the target object, said region in which the target object is located, and the observation credibility.

A third aspect of the present disclosure provides a computer-readable storage medium, having a computer program stored therein, the computer program being configured to implement the method for constructing the risk semantic space provided in the first aspect.

A fourth aspect of the present disclosure provides an electronic device. The electronic device includes: a processor; a memory, configured to store instructions executable by the processor, wherein the processor is configured to read the executable instructions from the memory and execute the instructions to implement the method for constructing the risk semantic space provided in the first aspect.

The embodiments of the present disclosure provide a method, apparatus, medium and electronic device for constructing a risk semantic space, applicable to the technical fields of artificial intelligence and computer vision. A spatial infrastructure model can be constructed using spatial structure information of a target scene, thereby acquiring risk factor data in the target scene. A risk semantic region in the target scene is determined through the spatial infrastructure model and the risk factor data. A region in which a target object is located is acquired, and whether said region is the risk semantic region is determined; and if so, dynamic visible domain analysis is performed on said region in which the target object is located to determine an observation credibility of said region. A risk semantic space model is constructed based on a behavior of the target object, said region in which the target object is located, and the observation credibility. In this way, by constructing the risk semantic model that associates the spatial structure of the target scene, the risk semantic region, the region in which the target object is located and the behavior of the target object, and the observation credibility, thereby achieving proactive risk perception and reasoning, and significantly enhancing the proactive security capability of the target scene.

### BRIEF DESCRIPTION OF THE DRAWINGS

The foregoing and other objects, features, and advantages of the present disclosure will become more apparent through a more detailed description of embodiments of the present disclosure in conjunction with the accompanying drawings. The accompanying drawings are provided to give a further understanding of the embodiments of the present disclosure, form part of the specification, are used together with the embodiments of the present disclosure to explain the present disclosure, and do not constitute any limitation on the present disclosure. In the accompanying drawings, the same reference numerals generally represent the same components or steps.
FIG. 1 is a schematic architecture diagram of a security monitoring system according to an exemplary embodiment of the present disclosure;
FIG. 2 is a schematic flowchart of a method for constructing a risk semantic space according to an exemplary embodiment of the present disclosure;
FIG. 3 is a schematic flowchart of step 210 according to an exemplary embodiment of the present disclosure;
FIG. 4 is a schematic flowchart of step 211 according to an exemplary embodiment of the present disclosure;
FIG. 5 is a partial schematic flowchart of step 230 according to an exemplary embodiment of the present disclosure;
FIG. 6 is a schematic flowchart of step 231 according to an exemplary embodiment of the present disclosure;
FIG. 7 is a schematic flowchart of step 2312 according to an exemplary embodiment of the present disclosure;
FIG. 8 is a schematic flowchart of step 240 according to an exemplary embodiment of the present disclosure;
FIG. 9 is a schematic flowchart of step 250 according to an exemplary embodiment of the present disclosure;
FIG. 10 is a schematic flowchart of step 260 according to an exemplary embodiment of the present disclosure;
FIG. 11 is a schematic structural diagram of an apparatus for constructing a risk semantic space according to an exemplary embodiment of the present disclosure; and
FIG. 12 is a structural diagram of an electronic device according to an exemplary embodiment of the present disclosure.

### DESCRIPTION OF THE EMBODIMENTS

In order to explain the present disclosure, exemplary embodiments of the present disclosure will be described in detail below with reference to the accompanying drawings. It is apparent that the described embodiments are only some of, but not all of, the embodiments of the present disclosure. It should be understood that the present disclosure is not limited by the exemplary embodiments.

It should be noted that, unless otherwise specifically stated, the relative arrangements, numerical expressions and numerical values of components and steps set forth in these embodiments do not limit the scope of the present disclosure.

### Overview of the Application

With the rapid development of artificial intelligence and computer vision technologies, intelligent loT devices have been widely applied in various fields such as home security, smart surveillance, and environmental monitoring. However, the existing security monitoring systems still remain in a "passive perception" stage, i.e., a response mechanism is triggered only after a risk event has occurred - for example, only after an elderly person has already fallen, a child has already climbed to a height, or an object has already been broken. This approach has obvious drawback: the system cannot truly understand a risk formation process. Most hazardous events, before they actually occur, tend to exhibit clear evolutionary processes and precursor risk behaviors. For example, child's climbing behaviors typically progress through stages such as moving an object, approaching a hazardous region, looking upward, and attempting to climb; the risk of an elderly person falling typically progresses through stages such as slowing gait, increasing wall-leaning behaviors, pausing when turning, and increasing nocturnal abnormal activities; and abnormal pet behaviors typically progress through stages such as restless activities, repetitive paths, frequent vocalizations, and reduced activities. The precursor risk behaviors occurring during these risk evolution processes are important signals for risk warning. However, the existing systems can only identify a final hazardous outcome and lack a "proactive perception" capability for risks, making it difficult to proactively perform risk reasoning before a risk event occurs, thereby missing the best opportunity to intervene before a risk event occurs, and reducing the effectiveness of security monitoring.

To address the above problems, an embodiment of the present disclosure provides a method for constructing a risk semantic space, which is capable of constructing a spatial infrastructure model using spatial structure information of a target scene, thereby acquiring risk factor data in the target scene. A risk semantic region in the target scene is determined based on the spatial infrastructure model and the risk factor data. A region in which a target object is located is acquired, and whether said region in which the target object is located is the risk semantic region is determined; and if so, dynamic visible domain analysis is performed on said region in which the target object is located to determine an observation credibility of said region. A risk semantic space model is constructed based on a behavior of the target object, said region in which the target object is located, and the observation credibility. In this way, by constructing the risk semantic model that associates the spatial structure of the target scene, the risk semantic region, the region in which the target object is located and the behavior of the target object, and the observation credibility, proactive risk perception and reasoning are achieved, and the traditional security mode of passive response is transformed into proactive risk identification and early warning, thereby significantly enhancing the proactive security capability of the target scene.

### Exemplary Application Scenes

The technical solutions provided by the embodiments of the present disclosure may be applied in various target scenes such as home scenes, office scenes, industrial scenes, and public venue scenes, especially in security application scenes. The followings are exemplary application scenes of the present disclosure:
Scene 1: Smart Home Security. In a modern smart home environment, various smart devices are typically deployed, including smart cameras, robotic vacuum cleaners, smart speakers, smart door locks, smoke detectors, and the like. By adopting the technical solutions provided by the embodiments of the present disclosure, a home security system may, based on spatial structure information, hazardous objects (e.g., knives, kettles, power strips, and cleaning, etc.), historical risk events and historically recorded behavior data of target objects (e.g., family members, and pets) in the home, perform space risk semantic understanding of a home environment to generate a risk semantic region containing risk levels and risk types. Moreover, in the case where a region in which a target object is located is a risk semantic region, dynamic visible domain analysis is performed on said region to determine an observation credibility of said region, and a risk semantic space model is constructed based on a behavior of the target object, said region in which the target object is located, and the observation credibility. After the risk semantic space model is constructed, the home security system may acquire images of the target object in real time. In the case where the target object enters the risk semantic region, the home security system can determine a space risk, a behavior risk, and a risk confidence of the target object according to the images of the target object and the risk semantic space model, and early warning and/or intervention measures are proactively triggered before a risk event occurs, thereby effectively improving the proactive security protection capability of the home and reducing the incidence of risk events.
Scene 2: Nursing Home Care. In a nursing home environment, injuries to elderly persons are security concerns that require particular attention, such as injuries resulting from risk events of the elderly persons including falls, collisions, and scratching. Taking a target object being an elderly person as an example, by adopting the technical solutions provided by the embodiments of the present disclosure, a nursing system may, based on spatial structure information, hazardous objects (e.g., knives, glassware, and water stains), historical risk events (e.g., historical fall events) and historically recorded behavior data of the elderly person in the nursing home, generate a risk semantic region and further construct a risk semantic space model. After the risk semantic space model is constructed, the nursing system may acquire images of the elderly person in real time. In the case where the elderly person enters the risk semantic region, a space risk, a behavior risk, and a risk confidence of the elderly person may be determined, and early warning and/or intervention measures are triggered in time, thereby effectively improving the proactive security protection capability of the nursing home and reducing the incidence of injury accidents of the elderly person.
Scene 3: Industrial Security Monitoring. In an industrial environment, security management of hazardous areas (e.g., high-temperature areas, high-pressure areas, and chemical storage areas) is of paramount importance. Taking a target object being a worker as an example, by adopting the technical solutions provided by the embodiments of the present disclosure, a security monitoring system may, based on spatial structure information, hazardous objects (e.g., furnaces, gas tanks, and chemicals), historical risk events, and historically recorded behavior data of the worker in an industrial environment (e.g., a factory), generate a risk semantic region and further construct a risk semantic space model. After the risk semantic space model is constructed, the security monitoring system may acquire images of the worker in real time. In the case where the worker enters the risk semantic region, a space risk, a behavior risk, and a risk confidence of that worker may be determined, and early warning and/or intervention measures are triggered in time, thereby effectively improving the proactive security protection capability of the industrial environment and reducing the incidence of industrial security accidents.

### Exemplary System

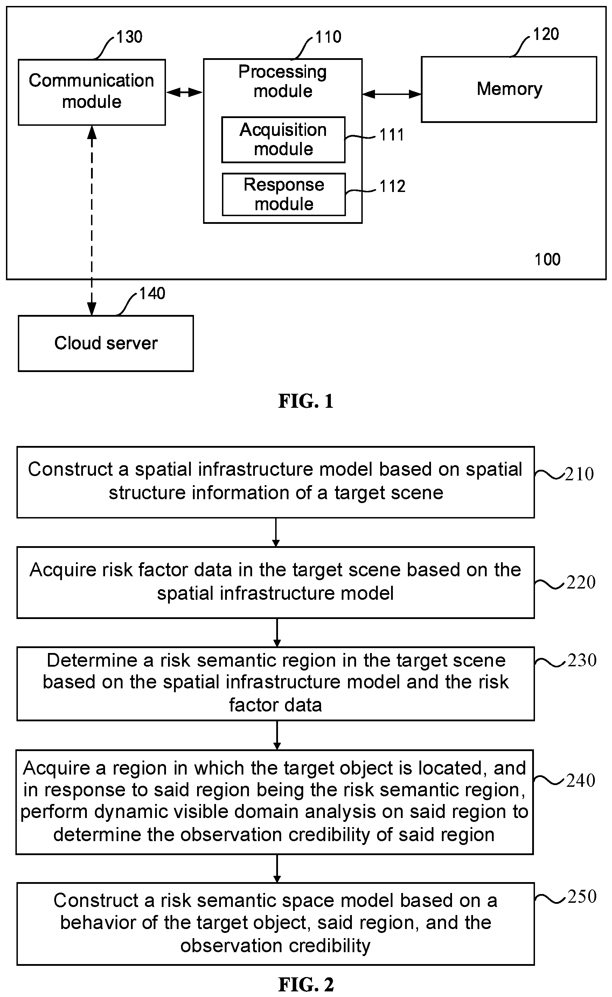

FIG. 1 is a schematic architecture diagram of a security monitoring system according to an exemplary embodiment of the present disclosure. As shown in FIG. 1, in some embodiments, the system 100 includes a processing module 110 and a memory 120.

In some application scenes, the security monitoring system may be a smart security system, a home patrol system, or a smart surveillance system, etc. The security monitoring system is introduced below by taking the smart home patrol system as an example.

The processing module 110 may be a general-purpose computing platform or an embedded platform, which is in communication connection with the memory 120, thereby achieving the transmission of instructions and data. The processing module 110 may include an acquisition module 111 and a response module 112.

The acquisition module 111 is configured to acquire spatial structure information of a home scene, images of a target object, and environment data of the home scene. Exemplarily, the acquisition module 111 may include a red green blue (RGB) camera, a depth camera, LiDAR, a simultaneous localization and mapping (SLAM) module of a robotic vacuum cleaner, a millimeter-wave radar, and a home robot, etc., and is configured to acquire the spatial structure information of the home scene and the images of the target object.

The response module 112 is configured to construct a spatial infrastructure model based on the spatial structure information acquired by the acquisition module 111, acquire risk factor data in the home scene based on the spatial infrastructure model, and further determine a risk semantic region in the home scene. In the case where a region in which the target object is located is the risk semantic region, dynamic visible domain analysis is performed on said region to determine an observation credibility of said region, and a risk semantic space model is constructed based on a behavior of the target object, said region, and the observation credibility. The response module 112 may include a digital signal processor, a central processing unit/microprocessor, a neural network processing unit, a graphics processing unit/vision processing unit, and the like.

The memory 120 is configured to store data information such as a hazardous object database, historical risk event records, target object behavior data, historical images of the target object, a spatial infrastructure model, and a risk semantic space model.

Exemplarily, the acquisition module 111 acquires spatial structure information of the home scene through the SLAM module and RGB camera of the robotic vacuum cleaner. The response module 112 parses the acquired spatial structure information to construct the spatial infrastructure model. Subsequently, the response module 112 determines a risk semantic region in the home scene, based on the spatial infrastructure model and in combination with hazardous object data, historical risk event records, and historically recorded target object behavior data acquired from the memory 120. The response module 112 determines a region in which the target object is located and a behavior of the target object based on historical images of the target object; in the case where said region in which the target object is located is the risk semantic region, perform dynamic visible domain analysis on said region to determine an observation credibility of said region; and construct the risk semantic space model based on the behavior of the target object, said region, and the observation credibility. After the risk semantic space model is constructed, the acquisition module 111 acquires images of the target object in real time and, based on one or more consecutive frames of images of the target object and the risk semantic space model, determines whether the target object has entered the risk semantic region; and if so, the behavior of the target object is identified, thereby determining a space risk, a behavior risk, and a risk confidence of the target object and generating corresponding risk early-warning.

In some embodiments, the security monitoring system may further include a communication module 130 configured to establish a communication connection with a cloud server 140, so as to implement remote data storage or computation tasks, thereby improving the overall operational efficiency and flexibility of the system.

### Exemplary Method

FIG. 2 is a schematic flowchart of a method for constructing a risk semantic space according to an exemplary embodiment of the present disclosure. The present embodiment may be applied on an electronic device or in a smart home system. For example, this electronic device may be an edge computing device such as a smart camera, a smart speaker, or a home robot, or may be a cloud server, or may be a distributed system executed collaboratively by the edge device and the cloud server. For example, the present embodiment may be applied in a device for decision-making or control in the smart home system, which will not be limited in the embodiments of the present disclosure. As shown in FIG. 2, the method includes the following steps.

Step 210: Construct a spatial infrastructure model based on spatial structure information of a target scene.

The spatial structure information is a data set indicating a geometric configuration, a relative positional relationship, a topological connectivity relationship and spatial behavior distribution patterns of a target object in a physical space of the target scene, including a spatial structure, area division and passage relationship of the target scene, structures and positions of obstacles in the target scene, as well as an activity region and a stay region of the target object.

The spatial infrastructure model is a structured model indicating a spatial topological relationship of the target scene, including a geometric configuration, functional semantic division, obstacle distribution and topological connectivity relationship of the target scene, and spatial behavior heat distribution of the target object.

The functional semantic division is used to indicate areas of different functions in the target scene, such as a kitchen, a bedroom, a living room, a dining room, and a bathroom. The spatial behavior heat distribution of the target object is used to indicate a stay duration and activity intensity of the target object in various areas of the target scene, reflecting spatial behavior distribution patterns of the target object.

In some embodiments, the spatial structure information of the target scene may be acquired through various loT devices and/or sensor devices.

Exemplarily, a two-dimensional or three-dimensional map of the target scene may be acquired through an SLAM module of a robotic vacuum cleaner; structures and positions of obstacles in the target scene may be acquired through an RGB camera and/or a depth camera; and precise spatial dimension information of the target scene may be acquired through LiDAR.

Step 220: Acquire risk factor data in the target scene based on the spatial infrastructure model.

The risk factor data includes hazardous object data, historical risk event data, and target object behavior data in the target scene.

In some embodiments, the hazardous object data includes types of hazardous objects and positions of the hazardous objects in the target scene. The types of the hazardous objects include objects and environmental abnormal states in the target scene that may cause injuries to the target object or trigger risks, such as knives, kettles, power strips, cleaning agents, and water stains on the floor. The historical risk event data includes types, occurrence times, occurrence locations, and severities of historical risk events. The types of the historical risk events include risk events or security accidents that have historically occurred in the target scene, such as fall events, overturning events, and liquid contamination events. The target object behavior data includes the activity intensity, activity frequency, and high-risk behaviors of the target object in the target scene.

In some embodiments, the acquiring the risk factor data in the target scene based on the spatial infrastructure model includes:
acquiring hazardous object data in the target scene based on the spatial infrastructure model and pre-stored images of the target scene; acquiring historical risk event data in the target scene based on the spatial infrastructure model and pre-stored historical risk events; and acquiring target object behavior data in the target scene based on the spatial infrastructure model and the pre-stored images of the target object.

In one implementation, based on a spatial coordinate system of the spatial infrastructure model, an image(s) of the target scene is mapped to a world coordinate system through a camera projection model, establishing a correspondence relationship between pixel coordinates of the image and spatial units/grids in the spatial infrastructure model. The image of the target scene is input into a trained hazardous object detection model, which outputs bounding boxes and types of hazardous objects in the image. Pixel coordinates of the hazardous objects are determined according to the bounding boxes of the hazardous objects (e.g., pixel coordinates of a hazardous object in the image are determined according to a center point of the bounding box); and three-dimensional coordinates of the hazardous objects are obtained using a correspondence relationship between the pixel coordinates of the image and the spatial units/grids in the spatial infrastructure model and a spatial coordinate system of the spatial infrastructure model, thereby obtaining positions of the hazardous objects.

It should be noted that the camera projection model may be the existing projection model, such as a pinhole model. The hazardous object detection model may be a general-purpose neural network model based on YOLO (You Only Look Once), Faster R-CNN (Faster Region-based Convolutional Neural Network), or DETR (DEtection TRansformer) architecture, such as YOLOv5 (You Only Look Once version 5), which will not be limited in the present disclosure

In one implementation, a pre-stored historical risk event is stored in the form of structured records, with each record including a type, occurrence time, occurrence location, severity level, and description of that historical risk event. Based on the spatial coordinate system of the spatial infrastructure model, the occurrence location of the historical risk event is mapped to the corresponding spatial units/grids in the spatial infrastructure model.

In one implementation, pre-stored images of the target object may be a sequence of video frames or continuously acquired images of the target object. The pre-stored images of the target object are input into a trained object detection model to acquire a bounding box of the target object. Based on the bounding box of the target object, a multi-object tracking algorithm is used to perform cross-frame association on the target object to generate a spatio-temporal trajectory of the target object. Based on the spatial coordinate system of the spatial infrastructure model, the spatio-temporal trajectory of the target object is mapped to the corresponding spatial units/grids in the spatial infrastructure model. Based on the mapped spatio-temporal trajectory of the target object, the number of times the target object enters and exits each region of the target scene within a preset time period (e.g., one day, or one week) is counted, and an average movement speed of the target object in each region is calculated. An activity frequency of the target object in each region is obtained based on the preset time period and the number of times the target object enters and exits each region in the target scene. The activity intensity of the target object in each region is obtained according to the average movement speed of the target object in each region. The pre-stored images of the target object are input into a trained high-risk behavior recognition model to identify a behavior of the target object, and high-risk behaviors are annotated. Based on the mapped spatio-temporal trajectory of the target object and the annotated high-risk behaviors, the high-risk behaviors of the target object in each region are obtained.

It should be noted that the multi-object tracking algorithm may adopt existing algorithms such as DeepSORT, ByteTrack, or Transformer-based trackers, which will not be limited in the present disclosure. The trained high-risk behavior recognition model may be a general-purpose model based on spatial temporal graph convolutional networks (ST-GCN), SlowFast, or a 3D convolutional neural network (3D CNN), which will not be limited in the present disclosure.

Step 230: Determine a risk semantic region in the target scene based on the spatial infrastructure model and the risk factor data.

The risk semantic region is used to indicate a spatial region in the target scene having a specific risk type and risk level.

Step 240: Acquire a region in which the target object is located, and in response to said region in which the target object is located being the risk semantic region, perform dynamic visible domain analysis on said region in which the target object is located to determine the observation credibility of said region in which the target object is located.

The observation credibility is used to indicate the observation reliability of said region, i.e., whether said region is being effectively observed.

In some embodiments, the region in which the target object is located is acquired based on the spatial infrastructure model and the pre-stored images of the target object; and in the case where said region is the risk semantic region, dynamic visible domain analysis is performed on said region to determine the observation credibility of said region.

In one implementation, the pre-stored images of the target object are input into the trained object detection model to obtain the bounding box of the target object. Pixel coordinates of the target object are determined according to the bounding box of the target object. Based on the spatial coordinate system of the spatial infrastructure model and the pixel coordinates of the target object, the pixel coordinates of the target object are mapped to the corresponding spatial units/grids in the spatial infrastructure model to obtain the region in which the target object is located in the target scene.

Step 250: Construct a risk semantic space model based on a behavior of the target object, said region in which the target object is located, and the observation credibility.

In some embodiments, in the case where the region in which the target object is located is the risk semantic region, the behavior of the target object is associated with said region in which the target object is located and the observation credibility of said region in which the target object is located, thereby obtaining the risk semantic space model.

According to the method provided by the embodiments of the present disclosure, the spatial infrastructure model is constructed through the spatial structure information of the target scene, thereby acquiring the risk factor data in the target scene. The risk semantic region in the target scene is determined through the spatial infrastructure model and the risk factor data. The dynamic visible domain analysis is performed on the target object located in the risk semantic region to determine the observation credibility, and the risk semantic space model is constructed based on the behavior of the target object, said region in which the target object is located, and the observation credibility. In this way, by constructing the risk semantic model that associates the spatial structure of the target scene, the risk semantic region, the region in which the target object is located and the behavior of the target object, and the observation credibility, proactive risk perception and reasoning are achieved, thereby significantly enhancing the proactive security capability of the target scene.

The scheme of the present disclosure is further described below in conjunction with the accompanying drawings.

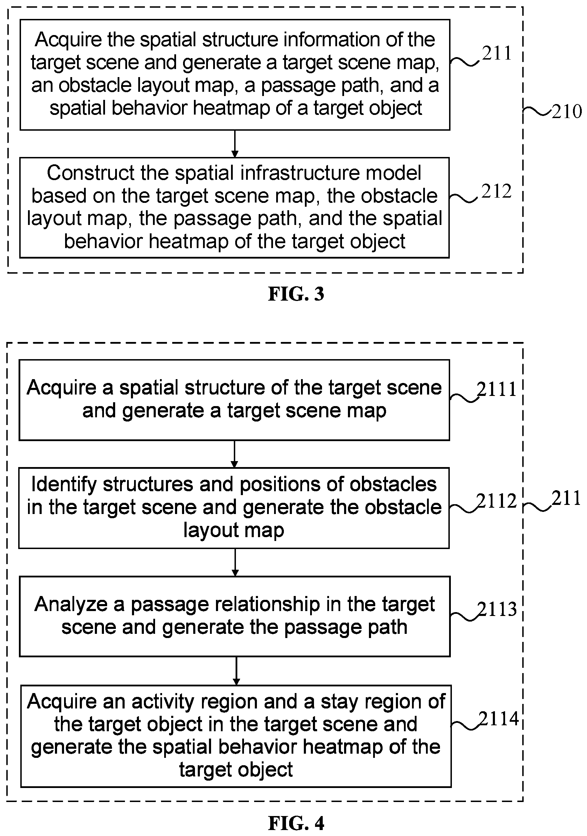

FIG. 3 is a schematic flowchart of step 210 according to an exemplary embodiment of the present disclosure. As shown in FIG. 3, step 210 may include the following steps 211 to 212.

Step 211: Acquire the spatial structure information of the target scene and generate a target scene map, an obstacle layout map, a passage path, and a spatial behavior heatmap of a target object.

The target scene map is used to represent a geometric configuration and functional semantic division of the target scene. The geometric configuration includes spatial dimension information of the target scene and relative positional relationships of various regions. The obstacle layout map is used to record types, positions, shapes, and dimensions of obstacles in the target scene. Taking a home scene as an example, the obstacles include furniture, home appliances, bathroom fixtures, and the like. The passage path is used to represent a connectivity relationship and a reachable path between different regions in the target scene. The spatial behavior heatmap is used to represent an activity intensity distribution of the target object in the target scene.

Step 212: Construct the spatial infrastructure model based on the target scene map, the obstacle layout map, the passage path, and the spatial behavior heatmap of the target object.

In some embodiments, the spatial infrastructure model includes a geometric layer, an obstacle layer, a topological layer, and a behavior attribute layer. The target scene map, the obstacle layout map, the passage path, and the spatial behavior heatmap of the target object are subjected to coordinate registration and then mapped respectively into the geometric layer, the obstacle layer, the topological layer, and the behavior attribute layer of the spatial infrastructure model, thereby constructing the spatial infrastructure model. The layers of the spatial infrastructure model are indexed and associated through identifiers of the spatial units/grids.

In some embodiments, the spatial infrastructure model may be constructed using an incremental update strategy. In the case where the spatial structure information in the target scene changes, a region in which the spatial structure information has changed may be determined from the image of the target scene, and only regions in which the relevant target scene map and/or obstacle layout map and/or passage path and/or spatial behavior heatmap of the target object have changed are updated to construct the spatial infrastructure model. This incremental update strategy effectively reduces the consumption of computational resources of the system and improves the efficiency of constructing the spatial infrastructure model.

Exemplarily, in the case where the target scene is a home scene and new furniture is added to a bedroom, the changes in obstacles in the bedroom are determined from an image of the bedroom, and only a region corresponding to a bedroom in the obstacle layout map is updated, thereby constructing the spatial infrastructure model.

According to the method provided by the present embodiment, the spatial infrastructure model is constructed using multi-dimensional spatial structure information of the target scene, such that the spatial infrastructure model contains a geometric configuration, functional semantic division, obstacle distribution, topological connectivity relationship, and spatial behavior heat distribution of the target object in the target scene, forming a comprehensive description of the spatial structure of the target scene and providing a foundation for subsequently determining the risk semantic region.

FIG. 4 is a schematic flowchart of step 211 according to an exemplary embodiment of the present disclosure. As shown in FIG. 4, step 211 may include the following steps 2111 to 2114.

Step 2111: Acquire a spatial structure of the target scene and generate a target scene map.

In some embodiments, the spatial structure of the target scene is acquired through an SLAM module mounted on a robotic vacuum cleaner, and a two-dimensional grid map or a three-dimensional point cloud map is generated as the target scene map.

In some embodiments, functional semantic division may be performed on the target scene map to obtain target scene maps corresponding to regions of different functions.

Exemplarily, functional semantic division is performed on the target scene map of the home to obtain target scene maps corresponding to a living room, kitchen, bathroom, bedroom, and balcony respectively.

Step 2112: Identify structures and positions of obstacles in the target scene and generate the obstacle layout map.

In some embodiments, images of the obstacles in the target scene are acquired through an RGB camera and/or a depth camera; images of the obstacles are input into an object detection model (e.g., a general-purpose neural network model based on YOLO or Faster R-CNN) to obtain types and bounding boxes of the obstacles; positions, shapes, and dimensions of the obstacles are obtained based on the bounding boxes of the obstacles; and the obstacle layout map is generated based on the types, positions, shapes, and dimensions of the obstacles.

In some embodiments, functional semantic division may be performed on the obstacle layout map to obtain obstacle layout maps corresponding to regions of different functions.

Step 2113: Analyze a passage relationship in the target scene and generate the passage path.

In some embodiments, functional semantic division is performed on the target scene to obtain regions of different functions in the target scene. A path traveled by the robotic vacuum cleaner between various regions is acquired through the SLAM module mounted on the robotic vacuum cleaner, and this path is used as the passage path.

In some embodiments, functional semantic division is performed on the target scene to obtain regions of different functions in the target scene. An object detection model is used to obtain positions of connecting structures (e.g., doors, and corridors) between various regions, and a passage relationship between the regions is established according to the positions of the connecting structures between various regions, thereby generating the passage path.

Step 2114: Acquire an activity region and a stay region of the target object in the target scene and generate the spatial behavior heatmap of the target object.

In some embodiments, an image sequence of the target object in the target scene is recorded by a camera within a preset time period; and the image sequence is input into a visual semantic model to obtain regions of the target scene corresponding to the target object in each frame of image. A frequency of appearances of the target object in each region is counted. A region in which the frequency exceeds a preset threshold is the activity region. A duration for which the target object remains stationary in each individual region is counted. A region in which the duration exceeds a preset threshold is the stay region. The spatial behavior heatmap of the target object is generated according to the activity region and the stay region of the target object.

It should be noted that, in order to improve accuracy, the preset time period may be a relatively long time period, e.g., 30 days. The visual semantic model may be the existing visual-language pre-training model, such as A Large-scale ImaGe and Noisy-text embedding (ALIGN), Large Language Instructed Segmentation Assistant (LISA), and the like.

According to the method provided by the present embodiment, the target scene map, the obstacle layout map, the passage path, and the spatial behavior heatmap of the target object are generated using the spatial structure information of the target scene, and multi-source heterogeneous spatial structure information data is transformed into a structured target scene map, obstacle layout map, passage path, and spatial behavior heatmap of the target object, thereby providing a foundation for constructing the spatial infrastructure model.

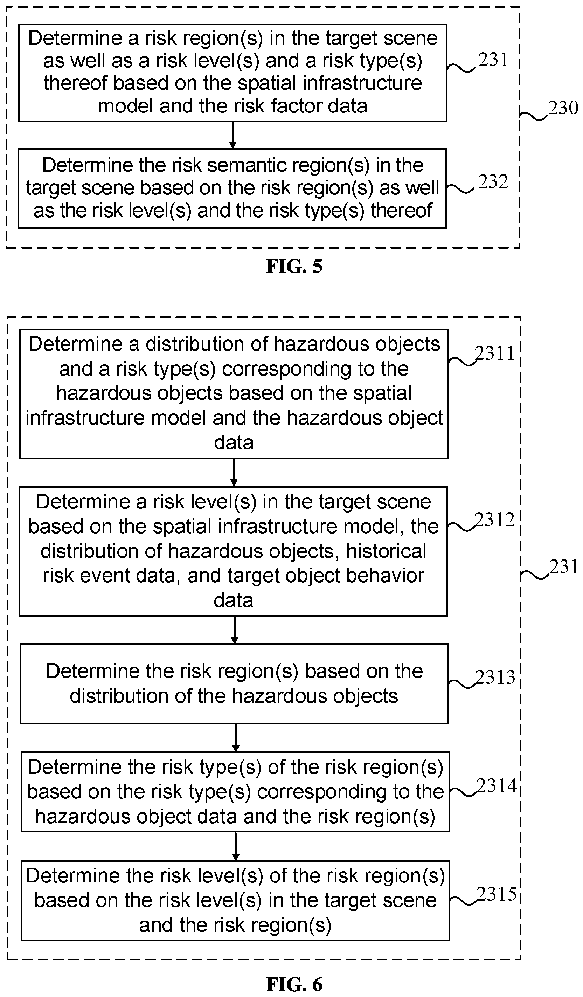

FIG. 5 is a schematic flowchart of step 230 according to an exemplary embodiment of the present disclosure. As shown in FIG. 5, step 230 may include the following steps 231 to 232.

Step 231: Determine a risk region(s) in the target scene as well as a risk level(s) and a risk type(s) of the risk region(s) based on the spatial infrastructure model and the risk factor data.

A risk region is used to indicate a region corresponding to a hazardous object in the target scene. A risk level is used to represent a danger level of a risk region, e.g., a low risk, a medium risk, a high risk, or an extremely high risk. A risk type is used to represent a danger category of a risk region, e.g., a sharp object risk, a burn risk, an electric leakage risk, or a fall risk.

In some embodiments, a corresponding relationship between the types of the hazardous objects and the risk types may be preset; after the type and position of a hazardous object in the target scene are acquired, the risk region corresponding to the hazardous object may be determined according to the position of the hazardous object; and the risk type of the risk region corresponding to the hazardous object may be determined based on the type of the hazardous object and said corresponding relationship.

Exemplarily, the types of the hazardous objects include knives, kettles, power strips, and cleaning agents, and the risk types corresponding to the knives, the kettles, the power strips, and the cleaning agents may be preset as a sharp object risk, a burn risk, an electric leakage risk, and a chemical risk, respectively.

In some embodiments, a risk score for a risk region may be evaluated, and a corresponding relationship between risk scores and risk levels may be preset; and the risk level of the risk region may be determined according to the risk score and this corresponding relationship.

Step 232: Determine the risk semantic region(s) in the target scene based on the risk region(s) as well as the risk level(s) and the risk type(s) thereof.

In some embodiments, after the type and position of a hazardous object in the target scene are acquired, the risk region corresponding to the hazardous object is determined in the spatial infrastructure model according to the position of the hazardous object. Using the method provided in step 231, the risk level and the risk type of the risk region corresponding to the hazardous object are determined, and risk level and risk type attribute(s) or label(s) are added to the risk region, thereby determining a risk semantic region in the target scene.

According to the method provided by the present embodiment, the risk semantic region having the risk level and the risk type is determined by using the spatial infrastructure model, the hazardous object data, the historical risk event data, and the target object behavior data, providing semanticized risk information for subsequent risk reasoning.

FIG. 6 is a schematic flowchart of step 231 according to an exemplary embodiment of the present disclosure. As shown in FIG. 6, step 231 may include the following steps 2311 to 2315.

Step 2311: Determine a distribution of hazardous objects and a risk type(s) corresponding to the hazardous objects based on the spatial infrastructure model and the hazardous object data.

The distribution of the hazardous objects is used to indicate a positional distribution of the hazardous objects in the target scene.

In one implementation, an image(s) of the target scene is input into a trained hazardous object detection model, which outputs bounding boxes and types of hazardous objects in the image. Pixel coordinates of the hazardous objects are determined according to the bounding boxes of the hazardous objects; positions of the hazardous objects are obtained using a corresponding relationship between pixel coordinates of the image and spatial units/grids in the spatial infrastructure model and the spatial coordinate system of the spatial infrastructure model; and the distribution of the hazardous objects in the target scene is obtained according to the positions of the hazardous objects.

In some embodiments, functional semantic division may be performed on the spatial infrastructure model to obtain spatial infrastructure models corresponding to regions of different functions. The distribution of the hazardous objects in each region is obtained according to the bounding boxes of the hazardous objects and the spatial infrastructure model corresponding to each region.

In some embodiments, the quantity of the hazardous objects in a region is obtained according to the distribution of the hazardous objects in this region of the target scene, and the density of the hazardous objects in this region is obtained according to the quantity of the hazardous objects in this region and an area of this region through the following formula (1):
${D}_{i} = \frac{{DangerObjectCount}_{i}}{{RegionArea}_{i}} ,$ (1)
in which, *RegionAreaᵢ* represents the area of the i^{th} region, *DangerObjectCountᵢ* represents the quantity of the hazardous objects in the i^{th} region, and *Dᵢ* represents the density of the hazardous objects in the i^{th} region.

Exemplarily, an image(s) of the target scene is input into a trained hazardous object detection model, which outputs bounding boxes and types of hazardous objects in the image, wherein the types include knives, kettles, and power strips. Pixel coordinates of the hazardous objects are determined according to the center points of the bounding boxes of the hazardous objects. By using a corresponding relationship between pixel coordinates of the image and grids in the spatial infrastructure model and a spatial coordinate system of the spatial infrastructure model, it is obtained that the above hazardous objects are all located in a kitchen region of the target scene, thereby obtaining that the quantity of hazardous objects in the kitchen region is 3. Assuming that an area of the kitchen region is 6 square meters, the density of the hazardous objects in the kitchen region is 0.5.

Step 2312: Determine a risk level(s) in the target scene based on the spatial infrastructure model, the distribution of hazardous objects, historical risk event data, and target object behavior data.

In some embodiments, functional semantic division may be performed on the spatial infrastructure model to obtain spatial infrastructure models corresponding to regions of different functions. The risk level of each region in the target scene is determined according to the spatial infrastructure model corresponding to each region, the distribution of the hazardous objects, the historical risk event data, and the target object behavior data.

Step 2313: Determine the risk region(s) based on the distribution of the hazardous objects.

In some embodiments, according to the distribution of the hazardous objects, a region obtained by taking the position of a hazardous object as a center and taking a preset region threshold as a radius is used as the risk region corresponding to this hazardous object.

Step 2314: Determine the risk type(s) of the risk region(s) based on the risk type(s) corresponding to the hazardous object data and the risk region(s).

In some embodiments, corresponding risk type attribute(s) or label(s) are added to a risk region according to the type of the hazardous object corresponding to this risk region and a corresponding relationship between types of hazardous objects and risk types.

It should be noted that when one risk region corresponds to a plurality of types of hazardous objects, i.e., corresponds to types of a plurality of hazardous objects, a plurality of corresponding risk type attributes or labels may be added to this risk region.

Step 2315: Determine the risk level(s) of the risk region(s) based on the risk level(s) in the target scene and the risk region(s).

In some embodiments, the corresponding risk level attribute(s) or label(s) is added to a risk region according to a risk score corresponding to the risk region and a corresponding relationship between risk scores and risk levels.

According to the method provided by the present embodiment, the risk regions with fine-grained risk attributes are generated by determining the risk regions as well as the risk levels and the risk types thereof, and quantitative representation and semantic description of risks in the target scene is implemented, thereby providing a risk information foundation for subsequent risk reasoning.

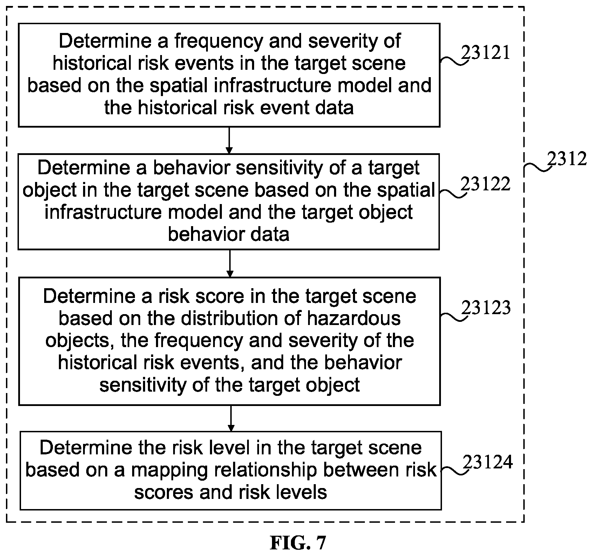

FIG. 7 is a schematic flowchart of step 2312 according to an exemplary embodiment of the present disclosure. As shown in FIG. 7, step 2312 may include the following steps 23121 to 23124.

Step 23121: Determine a frequency and severity of historical risk events in the target scene based on the spatial infrastructure model and the historical risk event data.

In some embodiments, pre-stored historical risk events are stored in the form of structured records, with each record including a type, occurrence time, occurrence location, severity level, and description of the historical risk event. Functional semantic division may be performed on the spatial infrastructure model to obtain spatial infrastructure models corresponding to regions of different functions. Based on the spatial coordinate system of the spatial infrastructure model, the occurrence locations of the historical risk events are mapped to the corresponding spatial units/grids in the spatial infrastructure model, obtaining types, occurrence times, and severity levels of the historical risk events in a region of the target scene. According to the occurrence times of the historical risk events, the quantity of the historical risk events in this region within a preset time period (e.g., within 30 days) is counted, and the frequency of the historical risk events in this region is obtained according to the preset time period and the quantity of the historical risk events in this region through the following formula (2):
${F}_{i} = \frac{{RiskEventCount}_{i}}{ObservationDays} ,$ (2)
in which, *ObservationDays* represents the preset time period, *RiskEventCountᵢ* represents the quantity of the historical risk events in the i^{th} region, and *Fᵢ* represents the frequency of the historical risk events in the i^{th} region.

It should be noted that *Fᵢ* represents the frequency of various types of historical risk events in the i^{th} region.

In some embodiments, using the method provided in the foregoing embodiments, the types, occurrence times, and severity levels of the historical risk events in the region of the target scene are obtained. According to the types and occurrence times of the historical risk events, the quantities of various types of historical risk events in this region within a preset time period (e.g., within 30 days) are separately counted, and the frequency of each type of historical risk events in this region is separately obtained according to the preset time period and the quantity of various types of historical risk events in this region. According to the severity levels and frequencies of various types of historical risk events in this region, the severity of the historical risk events in this region are obtained through the following formula (3):
${H}_{i} = {\sum }_{j = 1}^{N} \left({AccidentSeverity}_{ij}\times {Frequency}_{ij}\right) ,$ (3)
in which, *AccidentSeverityᵢⱼ* represents the severity level of the j^{th} type of historical risk events in the i^{th} region, *Frequencyᵢⱼ* represents the frequency of the j^{th} type of historical risk events in the i^{th} region, N represents the quantity of types of historical risk events in the i^{th} region, and *Hᵢ* represents the severity of the historical risk events in the i^{th} region.

Step 23122: Determine a behavior sensitivity of a target object in the target scene based on the spatial infrastructure model and the target object behavior data.

In some embodiments, using the method provided in the foregoing embodiments, an activity frequency, activity intensity, and high-risk behaviors of the target object in a region of the target scene are obtained. A probability of the high-risk behaviors of the target object in this region within a preset time period (e.g., within 30 days) is counted, and the activity frequency, activity intensity, and probability of the high-risk behaviors are weighted and summed using preset weight values to obtain the behavior sensitivity of the target object in this region through the following formula (4): ${B}_{i} = α ⋅ {ActivityFrequency}_{i} + β ⋅ {ActivityIntensity}_{i} + γ ⋅ {HighRiskBehaviorProbability}_{i} ,$ (4)
in which, α, β, and γ represent weight values, *ActivityFrequencyᵢ* represents the activity frequency of the target object in the i^{th} region, *ActivityIntensityᵢ* represents the activity intensity of the target object in the i^{th} region, *HighRiskBehaviorProbabilityᵢ* represents the probability of high-risk behaviors of the target object in the i^{th} region, and *Bᵢ* represents the behavior sensitivity of the target object in the i^{th} region.

Step 23123: Determine a risk score in the target scene based on the distribution of hazardous objects, the frequency and severity of the historical risk events, and the behavior sensitivity of the target object.

In one implementation, the distribution of the hazardous objects, the frequency and severity of the historical risk events, and the behavior sensitivity of the target object are weighted and summed using preset weight values to obtain the risk score of the region in the target scene through the following formula (5): ${RiskScore}_{i} = {ω}_{1} ⋅ {D}_{i} + {ω}_{2} ⋅ {F}_{i} + {ω}_{3} ⋅ {H}_{i} + {ω}_{4} ⋅ {B}_{i} ,$ (5)
in which, ω₁, ω₂, ω₃, and ω₄ represent weight values, *RiskScoreᵢ* represents the risk score of the i^{th} region, *Dᵢ* represents the density of the hazardous objects in the i^{th} region, *Fᵢ* represents the frequency of the historical risk events in the i^{th} region, *Hᵢ* represents the severity of the historical risk events in the i^{th} region, and *Bᵢ* represents the behavior sensitivity of the target object in the i^{th} region.

Step 23124: Determine the risk level in the target scene based on a mapping relationship between risk scores and risk levels.

In some embodiments, the mapping relationship (i.e., a corresponding relationship) between risk scores and risk levels may be preset; and according to the mapping relationship between risk scores and risk levels and the risk score of a region in the target scene, the risk level of this region corresponding to the risk score is determined.

Exemplarily, a risk score in the range of 0 to 0.25 corresponds to a risk level of low risk, the risk score in the range of 0.25 to 0.5 corresponds to a risk level of medium risk, a risk score in the range of 0.5 to 0.75 corresponds to a risk level of high risk, and a risk score in the range of 0.75 to 1 corresponds to a risk level of extremely high risk. Assuming that the risk score of a region is 0.4, the risk level of this region is a medium risk.

According to the method provided by the present embodiment, the risk scores and the risk levels are determined by means of the distribution of the hazardous objects, the frequency and severity of the historical risk events, and the behavior sensitivity of the target object, taking into account multi-dimensional risk factors to achieve a more accurate quantification and assessment of risks in the target scene, thereby providing a foundation for improving the accuracy of risk reasoning.

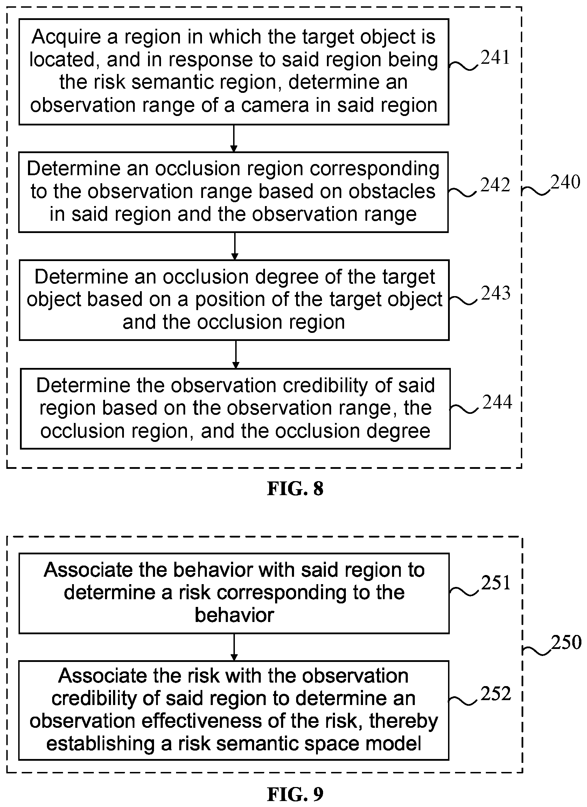

FIG. 8 is a schematic flowchart of step 240 according to an exemplary embodiment of the present disclosure. As shown in FIG. 8, step 240 may include the following steps 241 to 244.

Step 241: Acquire a region in which the target object is located, and in response to said region in which the target object is located being the risk semantic region, determine an observation range of a camera in said region in which the target object is located.

In some embodiments, a frustum model of the camera is established based on parameters such as an installation position, pitch angle, horizontal field-of-view range, and effective detection distance of the camera, to determine the observation range of the camera.

It should be noted that images of target objects exhibiting high-risk behaviors, images of target objects corresponding to historical risk events, and images of target objects exhibiting precursor risk behaviors may be pre-stored, and the regions in which the target objects are located may be acquired through the images of the target objects.

Step 242: Determine an occlusion region corresponding to the observation range based on obstacles in said region in which the target object is located and the observation range.

In some embodiments, based on an obstacle layout map in the spatial infrastructure model, the positions, shapes, and dimensions of the obstacles are analyzed, a spatial overlapping relationship between the obstacles and a frustum of the camera is calculated, and a spatial region that cannot be directly observed by the camera due to being occluded by the obstacles is determined as the occlusion region corresponding to the observation range.

Step 243: Determine an occlusion degree of the target object based on a position of the target object and the occlusion region.

The occlusion degree is used to characterize a proportion of the target object that falls within the occlusion region.

In some embodiments, the position of the target object is obtained from the image of the target object, and the occlusion degree of the target object is determined based on a spatial overlapping relationship between the position of the target object and the occlusion region.

Step 244: Determine the observation credibility of said region in which the target object is located based on the observation range, the occlusion region, and the occlusion degree.

In one implementation, a visible region ratio is obtained based on a ratio of the observation range to the occlusion region, and the observation credibility of the region in which the target object is located is obtained based on the visible region ratio and the occlusion degree through the following formula (6):
$VisibilityScore = {θ}_{1} ⋅ V - {θ}_{2} ⋅ P$ (6)
in which, *θ*₁ and *θ*₂ represent weight values, *VisibilityScore* represents the observation credibility of the region in which the target object is located, *V* represents the visible region ratio, and P represents the occlusion degree.

According to the method provided by the present embodiment, the observation credibility of the region in which the target object is located is determined based on the observation range, the occlusion region, and the occlusion degree, comprehensively taking into account the visible region ratio of the region in which the target object is located and the occlusion degree factor of the target object. When the observation credibility is relatively low, it indicates that this observation is insufficient to accurately reflect the true state of the target object, providing an assessment basis for the perception capability for subsequent risk reasoning. When the observation credibility is relatively low, i.e., when the perception capability is relatively low, the system may trigger a perception enhancement mechanism - for example, call cameras at other positions in the target scene for multi-angle observation so as to improve the observation credibility, thereby improving the accuracy and reliability of risk reasoning.

FIG. 9 is a schematic flowchart of step 250 according to an exemplary embodiment of the present disclosure. As shown in FIG. 9, step 250 may include the following steps 251 to 252.

Step 251: Associate the behavior with said region in which the target object is located to determine a risk corresponding to the behavior.

In some embodiments, the behavior of the target object is associated with the region in which the target object is located, i.e., an association relationship between the behavior of the target object and the region in which the target object is located is established; and a risk level and a risk type corresponding to the region in which the target object is located are determined as the risk corresponding to the behavior of the target object.

Exemplarily, in a home scene, it is assumed that the target object is a child located in a "knife region" in a kitchen, exhibiting a behavior of "approaching a knife." The "knife region" in the kitchen is a risk semantic region with a corresponding risk level of a high risk and risk type of a sharp object risk. By associating the behavior "approaching a knife" with the "knife region" in the kitchen, the risk corresponding to "approaching a knife" is determined to be a "high sharp object risk."

In some embodiments, the behavior of the target object is associated with the region in which the target object is located, i.e., an association relationship between the behavior of the target object and the region in which the target object is located is established; and the corresponding risk level and risk type are reasoned based on this association relationship, and this risk level and risk type are determined as the risk corresponding to the behavior of the target object.

Exemplarily, in a home scene, it is assumed that the target object is an elderly person located in a "water stain region" in a kitchen, exhibiting a behavior of "approaching an appliance." The "water stain region" in the kitchen is a risk semantic region. By associating the behavior "approaching an appliance" with the "water stain region" in the kitchen, the system determines a risk corresponding to "approaching an appliance" to be a "high electric shock risk" by reasoning, according to association relationship, that the corresponding risk level and risk type are a high risk and an electric shock risk, respectively.

In some embodiments, a series of behaviors of the target object within a preset time period is determined as a behavior chain of the target object. The behavior chain of the target object is associated with the region in which the target object is located, i.e., an association relationship between the behavior chain of the target object and the region in which the target object is located is established. A risk level and risk type corresponding to the region in which the target object is located are determined as a risk corresponding to the behavior chain of the target object.

Exemplarily, in a home scene, assuming that the target object is a pet located in a "cup region at an edge of a tea table" in a living room, a series of behaviors of the pet within 5 minutes are determined to obtain its behavior chain of "frequent jumping". The "cup region at an edge of a tea table" in the living room is a risk semantic region, with a corresponding risk level of a high risk and risk type of an overturning risk. By associating the behavior chain "frequent jumping" with the "cup region at an edge of a tea table" in the living room, a risk corresponding to "frequent jumping" is determined to be a "high overturning risk."

Step 252: Associate the risk with the observation credibility of said region in which the target object is located to determine an observation effectiveness of the risk, thereby establishing a risk semantic space model.

In some embodiments, a mapping relationship (i.e., a corresponding relationship) between observation credibility and observation effectiveness may be preset. The observation effectiveness corresponding to the observation credibility is determined according to the mapping relationship between observation credibility and observation effectiveness and the observation credibility of the region in which the target object is located.

In some embodiments, the risk corresponding to the behavior of the target object is associated with the observation credibility of the region in which the target object is located, and the corresponding observation effectiveness is obtained according to the observation credibility. The observation effectiveness is determined as the observation effectiveness of this risk. An association relationship among the region in which the target object is located, the behavior of the target object, the risk corresponding to the behavior, and the observation credibility and the observation effectiveness of the risk is established, thereby establishing a risk semantic space model.

Exemplarily, it is assumed that, in the foregoing example, the observation credibility of the region in which the child is located is 0.8, and the observation effectiveness corresponding to the observation credibility is "high effectiveness". By associating the risk "high sharp object risk" with the observation credibility of 0.8, the observation effectiveness of the "high sharp object risk" is determined to be "high effectiveness". An association relationship among the region in which the target object is located, the behavior of the target object, the risk corresponding to the behavior, and the observation credibility and the observation effectiveness of the risk is established: a knife region in a kitchen → approaching a knife → high sharp object risk → high effectiveness of 0.8.

In some embodiments, the risk corresponding to the behavior chain of the target object is associated with the observation credibility of the region in which the target object is located, and the corresponding observation effectiveness is obtained according to the observation credibility. The observation effectiveness is determined as the observation effectiveness of this risk. An association relationship among the region in which the target object is located, the behavior chain of the target object, the risk corresponding to the behavior chain, and the observation credibility and observation effectiveness of the risk is established, thereby establishing a risk semantic space model.

Exemplarily, it is assumed that, in the foregoing example, the observation credibility of the region in which the pet is located is 0.3, and the observation effectiveness corresponding to the observation credibility is "low effectiveness". By associating the "high overturning risk" with the observation credibility of 0.3, the observation effectiveness of the "high overturning risk" is determined to be "low effectiveness". An association relationship among the region in which the target object is located, the behavior chain of the target object, the risk corresponding to the behavior chain, and the observation credibility and observation effectiveness of the risk is established: a cup region at an edge of a tea table in a living room → frequent jumping → high overturning risk → low effectiveness of 0.3.

According to the method provided by the present embodiment, by establishing the association relationship among the region in which the target object is located, the behavior of the target object, the risk corresponding to the behavior, and the observation credibility and observation effectiveness of the risk, potential risks are reasoned according to the region in which the target object is located and the behavior of the target object, and the quality of risk perception is evaluated, thereby achieving proactive risk perception and reasoning.

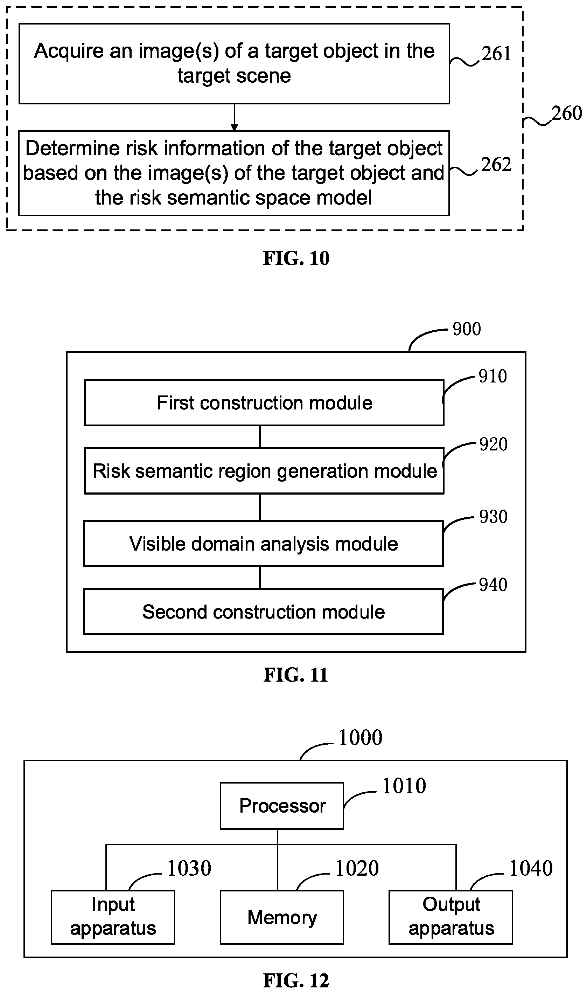

In some embodiments, after step 250, the method for constructing the risk semantic space provided by the present disclosure further includes step 260. FIG. 10 is a schematic flowchart of step 260 according to an exemplary embodiment of the present disclosure. As shown in FIG. 10, step 260 may include the following steps 261 to 262.

Step 261: Acquire an image(s) of a target object in the target scene.

In some embodiments, the images of the target object in the target scene are acquired in real time through a camera. The camera may include an RGB camera and a depth camera.

Step 262: Determine risk information of the target object based on the image(s) of the target object and the risk semantic space model.

The risk information includes a space risk, a behavior risk, and a risk confidence of the target object.

In some embodiments, the images of the target object acquired in step 261 are input into an object detection model to obtain bounding boxes of the target object. The current region in which the target object is located is obtained according to the bounding boxes of the target object and a target scene map of the risk semantic space model. The images of the target object acquired in step 261 are input into a behavior recognition model to obtain the current behavior of the target object. When the current region in which the target object is located is the risk semantic region, according to the association relationship among the region in which the target object is located, the behavior of the target object, the risk corresponding to the behavior, and the observation credibility and observation effectiveness of the risk as established by the risk semantic space model, the risk semantic region, risk level, risk type, and observation credibility and observation effectiveness corresponding to the current behavior of the target object are obtained. The risk semantic region is used as the space risk of the target object, the risk level and the risk type are used as the behavior risk of the target object, and the observation credibility and the observation effectiveness are used as the risk confidence of the target object.

In some embodiments, the exposure or brightness of the acquired images of the target object is analyzed to determine the illumination brightness of the current region in which the target object is located. Based on the illumination brightness, the observation credibility corresponding to the current behavior of the target object is updated through the following formula (7), and the observation effectiveness is updated based on the updated observation credibility; and the updated observation credibility and observation effectiveness are used as the risk confidence of the target object:
$\overline{VisibilityScore} = VisibilityScore + {θ}_{3} ⋅ L$ (7)
in which, *θ*₃ represents a weight value, *V̅i̅s̅i̅b̅i̅l̅i̅t̅y̅S̅c̅o̅r̅e̅* represents the updated observation credibility, and L represents the illumination brightness.

It should be noted that the existing methods may be used to analyze the exposure or brightness of the acquired images of the target object to determine the illumination brightness of the current region in which the target object is located. For example, the illumination brightness of the current region in which the target object is located may be calculated through the exposure parameters of the camera using an additive system of photographic exposure (APEX) calculation system, the exposure parameters including an ISO sensitivity, an aperture value, and exposure time.

According to the method provided by the present embodiment, the observation credibility of the region in which the target object is located is updated using the illumination brightness, and an illumination quality factor of the region in which the target object is located is added, thereby improving the accuracy of the observation credibility.

In some embodiments, when the risk confidence of the target object is below a preset threshold, indicating insufficient perception capability, the system may trigger a proactive perception enhancement mechanism - for example, call cameras at other positions in the target scene for multi-angle observation, and activate a night mode or supplementary lighting device to improve illumination conditions, and the like, thereby enhancing the perception. Through a multi-device collaborative proactive perception enhancement approach, the deficiencies caused by perception blind spots of fixed cameras and insufficient illumination intensity can be effectively compensated, thereby improving the accuracy of risk reasoning.

It should be noted that the steps 210 to 250 above may be completed in advance during a system initialization phase, while step 260 is cyclically executed during the real-time monitoring process. For example, the spatial infrastructure model and the risk semantic space model may be constructed when the system is deployed, and may be periodically updated according to actual circumstances during subsequent operation.

According to the method provided by the present embodiment, the risk information of the target object is determined using the image of the target object and the risk semantic space model, and proactive risk perception and reasoning are implemented, thereby significantly improving the proactive security capability of the target scene.

### Exemplary Apparatus

FIG. 11 is a structural schematic diagram of an apparatus for constructing a risk semantic space according to an exemplary embodiment of the present disclosure. The apparatus 900 of the present embodiment may be used to implement the corresponding method embodiments of the present disclosure. As shown in FIG. 11, the apparatus 900 may include:
a first construction module 910, configured to construct a spatial infrastructure model based on spatial structure information of a target scene;
a risk semantic region generation module 920, configured to acquire risk factor data in the target scene based on the spatial infrastructure model, and determine a risk semantic region in the target scene based on the spatial infrastructure model and the risk factor data;
a visible domain analysis module 930, configured to acquire a region in which a target object is located, and in response to said region in which the target object is located being the risk semantic region, perform dynamic visible domain analysis on said region in which the target object is located to determine an observation credibility of said region in which the target object is located; and
a second construction module 940, configured to construct a risk semantic space model based on a behavior of the target object, said region in which the target object is located, and the observation credibility.

In some embodiments, the first construction module 910 is specifically configured to: acquire the spatial structure information of the target scene and generate a target scene map, an obstacle layout map, a passage path, and a spatial behavior heatmap of a target object; and construct the spatial infrastructure model based on the target scene map, the obstacle layout map, the passage path, and the spatial behavior heatmap of the target object.

In some embodiments, the first construction module 910 is specifically configured to: acquire a spatial structure of the target scene and generate the target scene map; identify structures and positions of obstacles in the target scene and generate the obstacle layout map; analyze a passage relationship in the target scene and generate the passage path; and acquire an activity region and a stay region of the target object in the target scene and generate the spatial behavior heatmap of the target object.

In some embodiments, the risk semantic region generation module 920 is specifically configured to: determine a risk region in the target scene as well as a risk level and a risk type of the risk region based on the spatial infrastructure model and the risk factor data, the risk factor data including hazardous objects, historical risk events, and target object behavior data; and determine the risk semantic region in the target scene based on the risk region as well as the risk level and the risk type of the risk region.

In some embodiments, the risk semantic region generation module 920 is specifically configured to: determine a distribution of hazardous objects and a risk type corresponding to the hazardous objects based on the spatial infrastructure model and the hazardous object data; determine a risk level in the target scene based on the spatial infrastructure model, the distribution of the hazardous objects, the historical risk event data, and the target object behavior data; determine the risk region based on the distribution of the hazardous objects; determine the risk type of the risk region based on the risk type corresponding to the hazardous objects and the risk region; and determine the risk level of the risk region based on the risk level in the target scene and the risk region.

In some embodiments, the risk semantic region generation module 920 is specifically configured to: determine a frequency and severity of historical risk events in the target scene based on the spatial infrastructure model and the historical risk event data; determine a behavior sensitivity of a target object in the target scene based on the spatial infrastructure model and the target object behavior data; determine a risk score in the target scene based on the distribution of the hazardous objects, the frequency and severity of the historical risk events, and the behavior sensitivity of the target object; and determine the risk level in the target scene based on a mapping relationship between the risk score and the risk level.

In some embodiments, the visible domain analysis module 930 is specifically configured to: acquire the region in which the target object is located, and in response to said region in which the target object is located being the risk semantic region, determine an observation range of a camera in said region in which the target object is located; determine an occlusion region corresponding to the observation range based on obstacles in said region in which the target object is located and the observation range; determine an occlusion degree of the target object based on a position of the target object and the occlusion region; and determine the observation credibility of said region in which the target object is located based on the observation range, the occlusion region, and the occlusion degree.

In some embodiments, the second construction module 940 is specifically configured to: associate the behavior with said region in which the target object is located to determine a risk corresponding to the behavior; and associate the risk with the observation credibility of said region to determine an observation effectiveness of the risk, thereby establishing the risk semantic space model.

It should be noted that the information interaction, execution processes, and other content among the various modules/units in the foregoing apparatus embodiment are based on the same concept as the method embodiments of the present disclosure. For specific details, reference may be made to the description in the method embodiments of the present disclosure, and the beneficial technical effects corresponding to the exemplary apparatus embodiments may also be found in the corresponding beneficial technical effects described in the exemplary method section above, which will not be repeated here.

### Exemplary Electronic Device

FIG. 12 is a structural diagram of an electronic device according to an exemplary embodiment of the present disclosure. As shown in FIG. 12, the electronic device 1000 includes at least one processor 1010 and a memory 1020.

The processor 1010 may be a central processing unit (CPU) or another form of processing unit having data processing capability and/or instruction execution capability, and may control other components in the electronic device 1000 to perform desired functions.

The memory 1020 may include one or more computer program products, which may include various forms of computer-readable storage media, such as volatile memories and/or non-volatile memories. The volatile memories may include, for example, a random-access memory (RAM) and/or a cache memory, and the like. The non-volatile memories may include, for example, a read-only memory (ROM), a hard disk, flash memory, and the like. One or more computer program instructions may be stored on each computer-readable storage medium, and the processor 1010 may execute the one or more computer program instructions to implement the method for constructing the risk semantic space in the various embodiments of the present disclosure described above and/or other desired functions.

In one example, the electronic device 1000 may further include an input apparatus 1030 and an output apparatus 1040, which are interconnected via a bus system and/or another form of connection mechanism (not shown).

The input apparatus 1030 may also include, for example, a keyboard, a mouse, and the like.

The output apparatus 1040 may output various types of information externally, and may include, for example, a display, a speaker, a printer, and a communication network and a remote output apparatus connected thereto, and the like.

Of course, for simplicity, FIG. 12 shows only some of the components in the electronic device 1000 that are relevant to the present disclosure, and components such as buses and input/output interfaces are omitted. In addition, the electronic device 1000 may also include any other suitable components depending on specific applications.

### Exemplary Computer Program Product and Computer-Readable Storage Medium

In addition to the foregoing methods and devices, embodiments of the present disclosure may also provide a computer program product. The computer program product includes computer program instructions that, when being operated by a processor, cause the processor to perform the steps in the method for constructing the risk semantic space in the various embodiments of the present disclosure as described in the "Exemplary Method" section above.

The computer program product may be written in any combination of one or more programming languages for performing program codes for the operations of the embodiments of the present disclosure. The programming languages include object-oriented programming languages such as Java, C++, and the like, as well as conventional procedural programming languages such as "C" languages or similar programming languages. The program codes may execute entirely on a user computing device, partly on a user device, as a stand-alone software package, partly on a user computing device and partly on a remote computing device, or entirely on a remote computing device or a server.

Furthermore, embodiments of the present disclosure may also be implemented as a computer-readable storage medium having stored thereon computer program instructions that, when executed by a processor, cause the processor to perform the steps in the method for constructing a risk semantic space in the various embodiments of the present disclosure as described in the "Exemplary Method" section above.

The computer-readable storage medium may employ any combination of one or more readable media. The readable medium may be a readable signal medium or a readable storage medium. The readable storage medium includes, but is not limited to, an electrical, magnetic, optical, electromagnetic, infrared, or semiconductor system, apparatus or device, or any combination thereof. More specific examples (a non-exhaustive list) of the readable storage medium include: an electrical connection having one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The basic principles of the present disclosure have been described above in connection with specific embodiments. However, the advantages, benefits, and effects mentioned in the present disclosure are merely exemplary but not limitative, and shall not be considered as necessarily possessed by each embodiment of the present disclosure. Furthermore, the specific details disclosed above are for the purpose of illustration and convenience of understanding only, but are not limitative. The above details do not limit the present disclosure to necessarily be implemented using the specific details described above.

Those skilled in the art may make various modifications and variations to the present disclosure without departing from the spirit and scope of the present application. If such modifications and variations to the present application fall within the scope of the claims of the present disclosure and their equivalent technologies, the present disclosure is also intended to encompass such modifications and variations.

## Claims

1. A method for constructing a risk semantic space, comprising:
constructing (210) a spatial infrastructure model based on spatial structure information of a target scene;
acquiring (220) risk factor data in the target scene based on the spatial infrastructure model;
determining (230) a risk semantic region in the target scene based on the spatial infrastructure model and the risk factor data;
acquiring (240) a region in which a target object is located, and in response to said region in which the target object is located being the risk semantic region, performing dynamic visible domain analysis on said region in which the target object is located to determine an observation credibility of said region in which the target object is located; and
constructing (250) a risk semantic space model based on a behavior of the target object, said region in which the target object is located, and the observation credibility.

2. The method according to claim 1, wherein the determining (230) a risk semantic region in the target scene based on the spatial infrastructure model and the risk factor data comprises:
determining (231), based on the spatial infrastructure model and the risk factor data, a risk region in the target scene as well as a risk level and a risk type of the risk region, wherein the risk factor data comprises hazardous object data, historical risk event data and target object behavior data in the target scene; and
determining (232) the risk semantic region in the target scene based on the risk region as well as the risk level and the risk type of the risk region.

3. The method according to claim 1 or 2, wherein the acquiring (240) a region in which the target object is located, and in response to said region in which the target object is located being the risk semantic region, performing dynamic visible domain analysis on said region in which the target object is located to determine an observation credibility of said region in which the target object is located comprises:
acquiring (241) the region in which the target object is located, and in response to said region in which the target object is located being the risk semantic region, determining an observation range of a camera in said region in which the target object is located;
determining (242) an occlusion region corresponding to the observation range based on obstacles in said region in which the target object is located and the observation range;
determining (243) an occlusion degree of the target object based on a position of the target object and the occlusion region; and
determining (244) the observation credibility of said region in which the target object is located based on the observation range, the occlusion region, and the occlusion degree.

4. The method according to any one of claims 1-3, wherein the constructing (250) a risk semantic space model based on a behavior of the target object, said region in which the target object is located, and the observation credibility comprises:
associating (251) the behavior with said region in which the target object is located to determine a risk corresponding to the behavior; and
associating (252) the risk with the observation credibility of said region in which the target object is located to determine an observation effectiveness of the risk, thereby establishing the risk semantic space model.

5. The method according to claim 2, wherein the determining (231), based on the spatial infrastructure model and the risk factor data, a risk region in the target scene as well as a risk level and a risk type of the risk region comprises:
determining (2311) a distribution of hazardous objects and a risk type corresponding to the hazardous objects based on the spatial infrastructure model and the hazardous object data;
determining (2312) a risk level in the target scene based on the spatial infrastructure model, the distribution of the hazardous objects, the historical risk event data, and the target object behavior data;
determining (2313) the risk region based on the distribution of the hazardous objects;
determining (2314) the risk type of the risk region based on the risk type corresponding to the hazardous object data and the risk region; and
determining (2315) the risk level of the risk region based on the risk level in the target scene and the risk region.

6. The method according to claim 5, wherein the determining (2312) a risk level in the target scene based on the spatial infrastructure model, the distribution of the hazardous objects, the historical risk event data, and the target object behavior data comprises:
determining (23121) a frequency and severity of historical risk events in the target scene based on the spatial infrastructure model and the historical risk event data;
determining (23122) a behavior sensitivity of a target object in the target scene based on the spatial infrastructure model and the target object behavior data;
determining (23123) a risk score in the target scene based on the distribution of the hazardous objects, the frequency and severity of the historical risk events, and the behavior sensitivity of the target object; and
determining (23124) the risk level in the target scene based on a mapping relationship between the risk score and the risk level.

7. The method according to any one of claims 1 to 6, wherein the constructing (210) a spatial infrastructure model based on spatial structure information of a target scene comprises:
acquiring (211) the spatial structure information of the target scene and generating a target scene map, an obstacle layout map, a passage path, and a spatial behavior heatmap of a target object; and
constructing (212) the spatial infrastructure model based on the target scene map, the obstacle layout map, the passage path, and the spatial behavior heatmap of the target object.

8. The method according to claim 7, wherein the acquiring (211) the spatial structure information of the target scene and generating a target scene map, an obstacle layout map, a passage path, and a spatial behavior heatmap of a target object comprises:
acquiring (2111) a spatial structure of the target scene and generating the target scene map;
identifying (2112) structures and positions of obstacles in the target scene and generating the obstacle layout map;
analyzing (2113) a passage relationship in the target scene and generating the passage path; and
acquiring (2114) an activity region and a stay region of the target object in the target scene and generating the spatial behavior heatmap of the target object.

9. The method according to any one of claims 1-8, after the constructing (250) a risk semantic space model based on a behavior of the target object, said region in which the target object is located, and the observation credibility, further comprising:
capturing (261) an image of a target object in the target scene; and
determining (262) risk information of the target object based on the image of the target object and the risk semantic space model, wherein the risk information comprising a space risk, a behavior risk, and a risk confidence of the target object.

10. An apparatus (900) for constructing a risk semantic space, comprising:
a first construction module (910), configured to construct a spatial infrastructure model based on spatial structure information of a target scene;
a risk semantic region generation module (920), configured to acquire risk factor data in the target scene based on the spatial infrastructure model; and determine a risk semantic region in the target scene based on the spatial infrastructure model and the risk factor data;
a visible domain analysis module (930), configured to acquire a region in which a target object is located, and in response to said region in which the target object is located being the risk semantic region, perform dynamic visible domain analysis on said region in which the target object is located to determine an observation credibility of said region in which the target object is located; and
a second construction module (940), configured to construct a risk semantic space model based on a behavior of the target object, said region in which the target object is located, and the observation credibility.

11. The apparatus according to claim 10, wherein the risk semantic region generation module (920) is specifically configured to:
determine, based on the spatial infrastructure model and the risk factor data, a risk region in the target scene as well as a risk level and a risk type of the risk region, wherein the risk factor data comprises hazardous object data, historical risk event data and target object behavior data in the target scene; and
determine the risk semantic region in the target scene based on the risk region as well as the risk level and the risk type of the risk region.

12. The apparatus according to claim 10 or 11, wherein the visible domain analysis module (930) is specifically configured to:
acquire the region in which the target object is located, and in response to said region in which the target object is located being the risk semantic region, determine an observation range of a camera in said region in which the target object is located;
determine an occlusion region corresponding to the observation range based on obstacles in said region in which the target object is located and the observation range;
determine an occlusion degree of the target object based on a position of the target object and the occlusion region;
and
determine the observation credibility of said region in which the target object is located based on the observation range, the occlusion region, and the occlusion degree.

13. The apparatus according to any one of claims 10-12, wherein the second construction module (940) is specifically configured to:
associate the behavior with said region in which the target object is located to determine a risk corresponding to the behavior; and
associate the risk with the observation credibility of said region in which the target object is located to determine an observation effectiveness of the risk, thereby establishing the risk semantic space model.

14. A computer-readable storage medium, having a computer program stored therein, the computer program being configured to implement the method for constructing a risk semantic space according to any one of claims 1 to 9.

15. An electronic device (1000), comprising:
a processor (1010); and
a memory (1020), configured to store instructions executable by the processor, wherein
the processor is configured to read the executable instructions from the memory and execute the instructions to implement the method for constructing a risk semantic space according to any one of claims 1 to 9.
